# EUROPÄISCHE PATENTSCHRIFT

(11) **EP 3 177 823 B1**
(45) Veröffentlichungstag und Bekanntmachung des Hinweises auf die Patenterteilung: **17.07.2019**
(21) Anmeldenummer: 15741530.8
(22) Anmeldetag: 21.07.2015
(51) Int. Cl.: F02N 7/08, F15B 21/14, F15B 1/02

(54) **ANORDNUNG MIT EINEM HYDROSTATISCHEN ANTRIEB**
ARRANGEMENT WITH A HYDROSTATIC DRIVE
ARRANGEMENT AVEC UN ENTRAÎNEMENT HYDROSTATIQUE

(30) Priorität: 06.08.2014 DE 102014215567
(43) Veröffentlichungstag der Anmeldung: 14.06.2017
(73) Patentinhaber: Robert Bosch GmbH, 70442 Stuttgart (DE)
(72) Erfinder: SPIELVOGEL, Carola, 72186 Empfingen (DE); MAST, Michael, 88433 Schemmerhofen (DE); KRAJKA, Olivier, 71154 Nufringen (DE); HERNANDEZ LADERA, Paul, Luis, 89275 Elchingen (DE); BANTLE, Dietmar, 78737 Fluorn (DE)
(74) Vertreter: Thürer, Andreas
(86) Internationale Anmeldenummer: PCT/EP2015/066590
(87) Internationale Veröffentlichungsnummer: WO 2016/020181

(56) Entgegenhaltungen:
- WO-A1-2012/125798
- DE-A1- 3 302 546
- US-A1- 2013 098 464

## Beschreibung

Die Erfindung betrifft eine Anordnung mit einem hydrostatischen Antrieb, der zum Starten einer Brennkraftmaschine, insbesondere eines Dieselmotors, vorgesehen ist und die Merkmale aus dem Oberbegriff des Patentanspruchs 1 aufweist.

Die Hydromaschine eines derartigen hydrostatischen Antriebs wird von einer Brennkraftmaschine, die meistens ein Dieselmotor ist, als Pumpe angetrieben. im Betrieb als Pumpe wird der Druckmittelvolumenstrom zum Beispiel einem hydropneumatischen Hochdruckspeicher, der kurz auch als Hydrospeicher benannt wird, oder anderen hydraulischen Verbrauchern zugeführt. Der Antrieb kann auf einer mobilen Arbeitsmaschine wie zum Beispiel einem Bagger angeordnet sein, und die anderen hydraulischen Verbraucher können zum Beispiel eine hydraulische Lenkung und verschiedene Hubzylinder sein. In der Druckschrift US 2013/0098464 A1 ist ein hydraulisches System offenbart, das eine mit einer Brennkraftmaschine gekoppelten Hydromaschine hat, die als Pumpe einen hydraulischen Verbrauer versorgt. Wenn z.B. wegen einer ziehenden Last der Verbraucher voreilt, ist die Hydromaschine als Motor betreibbar. Sie entlastet somit die Brennkraftmaschine und spart so Energie.

In den Druckschriften US 3,384,027 und DE 20 2013 003 490 U1 sind derartige Antriebe gezeigt, bei denen die Hydromaschine, außer dass sie andere hydraulische Verbraucher versorgt, auch einen Hydrospeicher lädt. Nach einem Stopp der Brennkraftmaschine wird für ihr erneutes Starten die Hydromaschine als Motor betrieben und aus dem Hydrospeicher mit Druckmittel versorgt.

Dabei sind in den letzten Jahren Aspekte der Kraftstoffeinsparung zunehmend wichtig geworden, so dass es Ansätze für Start-Stopp-Funktionen für den Dieselmotor gibt. Wenn dieser nicht benötigt wird, soll er abgeschaltet werden, und wenn er wieder benötigt wird, muss er erneut gestartet beziehungsweise angelassen werden. Dies kann vergleichsweise häufig geschehen, wobei bei jedem Starten Energie nötig ist.

In der Druckschrift WO 2012/125798 A1 ist ein Antrieb gezeigt, bei dem die Brennkraftmaschine im Normalbetrieb eine als Pumpe betriebene Hydromaschine antreibt, die - neben der Versorgung von anderen hydraulischen Verbrauchern - auch den Hydrospeicher lädt. Für ein erneutes Starten der Brennkraftmaschine wird das Druckmittel des Hydrospeichers genutzt, um die dann als Startermotor genutzte Hydromaschine anzutreiben. Dabei wird übergangsweise ein Verbraucherabsperrventil in der Pumpenleitung zu den anderen Verbrauchern geschlossen, damit diese nicht unkontrolliert aktiviert oder bewegt werden.

Nachteilig an derartigen Antrieben ist, dass bei der Nutzung der Hydromaschine als Anlassmotor die Durchflussrichtung beibehalten werden muss, damit die Brennkraftmaschine in der gleichen vorbestimmten Drehrichtung wieder gestartet wird, wie sie zuvor gearbeitet hat. Daher muss der Anschluss, der im Normalbetrieb der Niederdruckanschluss oder Sauganschluss der als Pumpe wirkenden Hydromaschine war, beim Anlassen die Hochdruckseite der als Motor wirkenden Hydromaschine bilden. Dem entsprechend sind bei dem Antrieb der WO 2012/125798 A1 verschiede Schaltventile nötig, bei denen sichergestellt werden muss, dass sie geschaltet sind, bevor das Anlassen der Brennkraftmaschine erfolgen kann.

Dem gegenüber liegt der Erfindung die Aufgabe zu Grunde, einen hydrostatischen Antrieb zum Starten einer Brennkraftmaschine zu schaffen, bei dem das Starten der Brennkraftmaschine möglich ist, ohne dass an der Hydromaschine gegenüber dem Betrieb als Pumpe ein Druckseitenwechsel erfolgen muss. Einen derartigen Antrieb offenbart die DE 33 02 546 A1.

Dabei soll die Start-Stopp-Funktion schnell und sicher reagieren können.

Diese Aufgabe wird gelöst durch eine Anordnung mit einem hydrostatischen Antrieb mit den Merkmalen des Patentanspruchs 1.

Weitere vorteilhafte Ausgestaltungen der Erfindung sind in den abhängigen Patentansprüchen beschrieben.

Der beanspruchte hydrostatische Antrieb weist eine mittels einer hydraulischen Verstellvorrichtung in ihrem Hubvolumen verstellbaren Hydromaschine, die als Pumpe und als Motor betreibbar ist und in einem Betrieb als Motor zum Antreiben der Brennkraftmaschine vorgesehen ist, zumindest einen Hochdruckspeicher, aus dem die Hydromaschine für den Betrieb als Motor über eine Pumpenleitung, die zwischen einem Arbeitsanschluss der Hydromaschine und dem Hochdruckspeicher verläuft, mit Druckmittel versorgbar ist, und ein Speicherabsperrventil mit einer ersten Stellung und einer zweiten Stellung, das in der Pumpenleitung angeordnet ist und durch das eine fluidische Verbindung vom Hochdruckspeicher zur Hydromaschine in der ersten Stellung offen und in der zweiten Stellung abgesperrt ist. Damit ist eine Start-Stopp-Funktion der Brennkraftmaschine realisiert. Erfindungsgemäß ist die Hydromaschine durch die Verstellvorrichtung von einem positiven Hubvolumen und Pumpenbetrieb über eine Nullstellung, in der das Hubvolumen null ist, zu negativem Hubvolumen und Motorbetrieb verstellbar. Somit sind der Betrieb als Pumpe und der Betrieb als Motor bei gleicher Drehrichtung der Hydromaschine möglich, wobei der gleiche Arbeitsanschluss jeweils der Druckanschluss ist. Bei einer derartigen Verstellbarkeit wird die Hydromaschine, wenn sie eine Axialkolbenmaschine ist, auch als durchschwenkbar charakterisiert. Für eine Verstellung zu negativem Hubvolumen ist die Verstellvorrichtung über ein Steuerventil unabhängig vom Arbeitsanschluss der Hydromaschine aus einer Druckmittelquelle mit Druckmittel versorgbar.

Erfindungsgemäß ist in der Pumpenleitung ein Verbraucherabsperrventil vorgesehen. Damit kann der zumindest eine Verbraucher abgesperrt werden und insbesondere von der Hydromaschine getrennt werden, wenn die Brennkraftmaschine gestartet wird oder der Hochdruckspeicher aktiv geladen wird.

Bei einem erfindungsgemäßen hydrostatischen Antrieb kann die Verstellung zu negativem Hubvolumen und damit das Starten der Brennkraftmaschine sehr schnell erfolgen, da ein entsprechender Eingang des Steuerventils von der Druckmittelquelle her dauernd mit Druck beaufschlagt sein kann und nach dem Schalten des Steuerventils die Verstellvorrichtung unmittelbar mit Druck beaufschlagt wird. Insbesondere kann nun die Verstellvorrichtung nach einem Schalten des Steuerventils schon mit Druckmittel versorgt werden, noch bevor eine Verbindung des Arbeitsanschlusses der Hydromaschine mit dem Hochdruckspeicher hergestellt ist, so dass während des Verstellvorgangs am Arbeitsanschluss noch kein Druck ansteht. Es wird dadurch erreicht, dass kein beziehungsweise nur ein sehr geringes Drehmoment entgegen der normalen Drehrichtung der Brennkraftmaschine auf die Kurbelwelle der Brennkraftmaschine übertragen wird. Da während des Verstellvorgangs kein hoher Druck am Arbeitsanschluss der Hydromaschine anliegt, ist die mechanische Reibung in im Verstellsystem gering. Das trägt in hohem Maße dazu bei, dass der Verstellvorgang schnell erfolgt.

Bevorzugt ist die Verstellvorrichtung über das Steuerventil mit dem Hochdruckspeicher verbindbar. Damit ist der vorrichtungstechnische Aufwand gering. Bei der Druckmittelquelle kann es sich jedoch auch um einen Hilfsspeicher mit einem deutlich niedrigeren Druckniveau, als es im Hochdruckspeicher herrscht, handeln, zum Beispiel um einen Hydrospeicher, der über den Niederdruck eines hydrostatischen Fahrantriebs mit einem geschlossenen hydraulischen Kreislauf gespeist wird.

Dass die Verstellvorrichtung nach einem Schalten des Steuerventils schon mit Druckmittel versorgt werden, noch bevor eine Verbindung des Arbeitsanschlusses der Hydromaschine mit dem Hochdruckspeicher hergestellt ist, lässt sich auf einfache Weise dadurch erreichen, dass bei einer Verstellung zu negativem Hubvolumen zuerst über das Steuerventil die Verstellvorrichtung mit Stelldruck beaufschlagt und mit einer zeitlichen Verzögerung das Speicherabsperrventil in seine erste Stellung gebracht wird.

In einer besonders bevorzugten Ausgestaltung ist das Steuerventil ein Sitzventil mit einem Eingang, der mit der Druckmittelquelle fluidisch verbunden ist, und mit einem Stelldruckausgang, der mit einem Stelldruckeingang der Verstellvorrichtung verbunden ist. Das Steuerventil kann eine erste Stellung, in der der Eingang wenigstens annähernd leckagefrei abgesperrt ist, und eine zweite Stellung einnehmen, in der der Eingang mit dem Stelldruckausgang fluidisch verbunden ist. Somit kann dauerhaft Druck am Eingang des Steuerventils anstehen, ohne dass in nennenswertem Umfang Leckage auftritt und damit Energie verloren geht.

Vorteilhafterweise ist der Hochdruckspeicher von der Hydromaschine im Betrieb als Pumpe aufladbar.

Um im Betrieb als Pumpe den Förderstrom zum Laden des Hochdruckspeichers oder zur Versorgung anderer hydraulischer Verbraucher nach gewissen Kriterien verändern zu können, ist der Hydromaschine üblicherweise ein hydraulisches Regelgerät mit einem Stelldruckausgang zugeordnet. Vorteilhafterweise ist dann das Steuerventil ein 3/2-Wegeventil mit einem ersten Eingang, der mit dem Stelldruckausgang des hydraulischen Regelgeräts fluidisch verbunden ist, mit einem zweiten Eingang, der mit der Druckmittelquelle fluidisch verbunden ist, und mit einem Ausgang ist, der mit einem Stelldruckeingang der Verstellvorrichtung verbunden ist. Das Steuerventil weist eine erste Stellung, in der der Ausgang mit dem der erste Eingang fluidisch verbunden und der zweite Eingang abgesperrt ist, und eine zweite Stellung auf, in der der Ausgang mit dem zweiten Eingang verbunden und der erste Eingang abgesperrt ist. Damit ist das Regelgerät in der ersten Stellung des Steuerventils wirksam und in der zweiten Stellung des Steuerventils unwirksam.

Das Regelgerät ist insbesondere ein Load-Sensing-Regelventil, das im Sinne einer Druckmittelzuflusses zum Stelldruckraum der Verstellvorrichtung vom Pumpendruck und im Sinne eines Druckmittelabflusses aus dem Stelldruckraum von einer Feder und einem LS-Druck, der an einem LS-Anschluss ansteht, beaufschlagt wird. Bei einer Load-Sensing-Regelung, kurz LS-Regelung, wird in Abhängigkeit eines in einer gemeinsamen LS-Meldeleitung wirkenden höchsten Lastdrucks zumindest eines hydraulischen Verbrauchers ein von einer als Pumpe betriebenen hydrostatischen Hydromaschine ein solcher Fördervolumenstrom gefördert, dass sich in der Pumpenleitung ein um eine bestimmte Druckdifferenz, die auch Pumpen-Delta-p (Pumpen-Ap) genannt wird, über dem höchsten Lastdruck liegender Pumpendruck einstellt. Insofern ist eine LS-Regelung eigentlich eine Druckdifferenzregelung, die aber zusammen mit einer Messblende, über die der Fördervolumenstrom fließt, zu einer Förderstromregelung wird. Die LS-Meldeleitung ist mit einem LS-Anschluss des Load-Sensing-Regelventils, kurz auch LS-Regler genannt, verbunden. Das Load-Sensing-Regelventil, das auch als Förderstromregelventil, kurz auch Förderstromregler genannt, bezeichnet wird, ist meist mit einem Druckregelventil kombiniert, mit dem ein maximaler Pumpendruck eingestellt wird. Die Kombination aus LS-Regelventil oder Förderstromregelventil und Druckregelventil wird auch als Druck-Förderstromregler bezeichnet.

Bevorzugt ist an den LS-Anschluss zwischen diesem und einer Düse ein verstellbares Druckbegrenzungsventil angeschlossen. Mit diesem kann somit während des Ladens des Hochdruckspeichers der Pumpendruck kontinuierlich hochgefahren und damit die Ladegeschwindigkeit vorgegeben werden. Es kann somit auch aus dem Druck der Pumpenleitung ein verringerter LS-Druck abgeleitet und zum LS-Anschluss gemeldet werden. Dieser verringerte LS-Druck kann auch niedriger als übliche Lastdrücke der anderen Verbraucher sein. Damit kann die Verstellvorrichtung beziehungsweise das LS-Regelventil beim Laden des Speichers derart beeinflusst werden, dass das Hubvolumen der Hydromaschine wenigstens zeitweise gegenüber seinem Maximalwert verringert ist.

Die Hydromaschine kann im Betrieb als Pumpe zur Druckmittelversorgung von anderen hydraulischen Verbrauchern, zum Beispiel für eine hydrostatische Lenkung und /oder eine Arbeitshydraulik eines Baggers genutzt werden. Bei einer energiesparenden Weiterbildung des erfindungsgemäßen Antriebs hat dieser ein Load-Sensing-System, bei dem der Pumpendruck in Abhängigkeit eines in einer gemeinsamen LS-Meldeleitung wirkenden höchsten Lastdrucks zumindest eines anderen hydraulischen Verbrauchers regelbar ist. Zunehmender Lastdruck bewirkt zunehmenden Fördervolumenstrom, wozu die LS-Meldeleitung bevorzugt mit einem LS-Anschluss des Reglers oder direkt mit der Verstellvorrichtung verbunden ist. Die Pumpenleitung ist über ein LS-Ventil mit der LS-Meldeleitung oder direkt mit dem LS-Anschluss verbindbar. Damit kann am LS-Anschluss ein LS-Druck eingestellt werden, der vom höchsten Lastdruck des zumindest einen anderen Verbrauchers abweicht.

Während der Versorgung eines anderen Verbrauchers ist ein passives Aufladen des Hochdruckspeichers bis auf den im Betrieb auftretenden höchsten Lastdruck der Verbraucher möglich, wobei der maximale Wert des höchsten Lastdrucks durch ein Druckbegrenzungsventil, das den Verbrauchern zugeordnet ist, bestimmt sein kann. Der Hochdruckspeicher soll jedoch für einen folgenden Startvorgang höher als dieser maximale Wert des höchsten Lastdrucks aufgeladen sein. Deshalb geht einem Ausschalten der Brennkraftmaschine in jedem Fall ein aktives Aufladen des Hochdruckspeichers voraus.

Durch Meldung des Pumpendrucks oder eines gegenüber dem Pumpendruck reduzierten, aber über dem maximal möglichen höchsten Lastdruck der anderen hydraulischen Verbraucher liegenden LS-Drucks ist ein aktives Laden des Hochdruckspeichers über den im vorherigen Arbeitszyklus auftretenden höchsten Pumpendruck, bis zu dem das passive Aufladen möglich ist, und über den maximal möglichen höchsten Lastdruckmöglich, bevor die Brennkraftmaschine abgeschaltet wird. Durch Übertragung des Drucks der Pumpenleitung über das LS-Ventil zum LS-Anschluss kann ein hydraulischer Kurzschluss erzeugt werden. Dann stellt die Pumpe ihren maximalen Fördervolumenstrom ein. Wenn dabei die Hydromaschine eine Axialkolbenmaschine ist, stellt ihre Verstellvorrichtung einen maximalen Schwenkwinkel ein. Beim Laden des Speichers ist der Druck der Pumpenleitung gleich dessen Speicherdruck, sofern nicht zwischen der Hydromaschine und dem Hochdruckspeicher noch eine Blende eingefügt ist.

Bei einer bevorzugten Ausgestaltung ist das LS-Ventil ein Schaltventil, das in einer durch eine Feder vorgespannten Grundstellung die Pumpenleitung zur LS-Meldeleitung oder zum LS-Anschluss absperrt, und das in einer - zum Beispiel durch einen elektromagnetischen Aktor geschalteten - Schaltstellung die Pumpenleitung mit der LS-Meldeleitung oder mit dem LS-Anschluss verbindet. Damit ist in der Grundstellung des LS-Ventils der Normalbetrieb des erfindungsgemäßen Antriebs realisiert, bei dem der höchste Lastdruck des zumindest einen Verbrauchers zur herkömmlichen Regelung der als Pumpe betriebenen Hydromaschine dient, während in der Schaltstellung des LS-Ventils der Speicher geladen werden kann, damit dessen Druckmittel zum nächsten Anlassen der Brennkraftmaschine oder zum nächsten schnellen Verstellen zur Verfügung steht.

Bei einer bevorzugten Weiterbildung ist in der LS-Meldeleitung ein erstes Wechselventil angeordnet, an dessen ersten Eingang der höchste Lastdruck des zumindest einen Verbrauchers ansteht, und an dessen zweiten Eingang das LS-Ventil angeschlossen ist. Damit steht an einem Ausgang des ersten Wechselventils stets der höchste von den Verbrauchern gemeldete Lastdruck oder der über das LS-Ventil gemeldete Druck der Pumpenleitung an, wenn dieser höher ist.

Die Sperrstellung des Speicherabsperrventils hat vorzugsweise eine Rückschlagfunktion, deren Durchlassrichtung von der Pumpenleitung zum Hochdruckspeicher gerichtet ist. Alternativ kann auch parallel zum Speicherabsperrventil ein Rückschlagventil vorgesehen sein, dessen Durchlassrichtung von der Pumpenleitung zum Hochdruckspeicher gerichtet ist. Damit kann der Speicher passiv nachgeladen werden und verbleibt auf dem während des Betriebs der anderen hydraulischen Verbraucher erreichten höchsten Pumpendruck.

Bei einem besonders bevorzugten Anwendungsfall des erfindungsgemäßen Antriebs ist dieser in einer mobilen Arbeitsmaschine vorgesehen. Einer der Verbraucher kann eine Lenkung der mobilen Arbeitsmaschine sein. Dann ist an die LS-Meldeleitung ein Ausgang eines zweiten Wechselventils angeschlossen, an dessen ersten Eingang eine LS-Meldeleitung der Lenkung angeschlossen ist, und an dessen zweiten Eingang eine LS-Meldeleitung der übrigen Verbraucher angeschlossen ist. Der Ausgang des zweiten Wechselventils ist über die LS-Meldeleitung mit dem ersten Eingang des ersten Wechselventils verbunden.

Wenn die mobile Arbeitsmaschine einen hydrostatischen Fahrantrieb hat und die Verstellvorrichtung der Hydromaschine erfindungsgemäß mit dem Hilfs-Hydrospeicher verbindbar ist, wird es besonders bevorzugt, wenn dieser von Speisedruckmittel des Fahrantriebs gespeist wird.

Mehrere Ausführungsbeispiele eines hydrostatischen Antriebs sind in den Zeichnungen dargestellt. Anhand der Figuren dieser Zeichnungen wird die Erfindung nun näher erläutert.

Es zeigen
Figur 1 einen Schaltplan eines ersten Ausführungsbeispiels,
Figur 2 einen Schaltplan eines zweiten Ausführungsbeispiels und
Figur 3 einen Ausschnitt eines Schaltplans eines nicht zur Erfindung gehörenden dritten Ausführungsbeispiels.

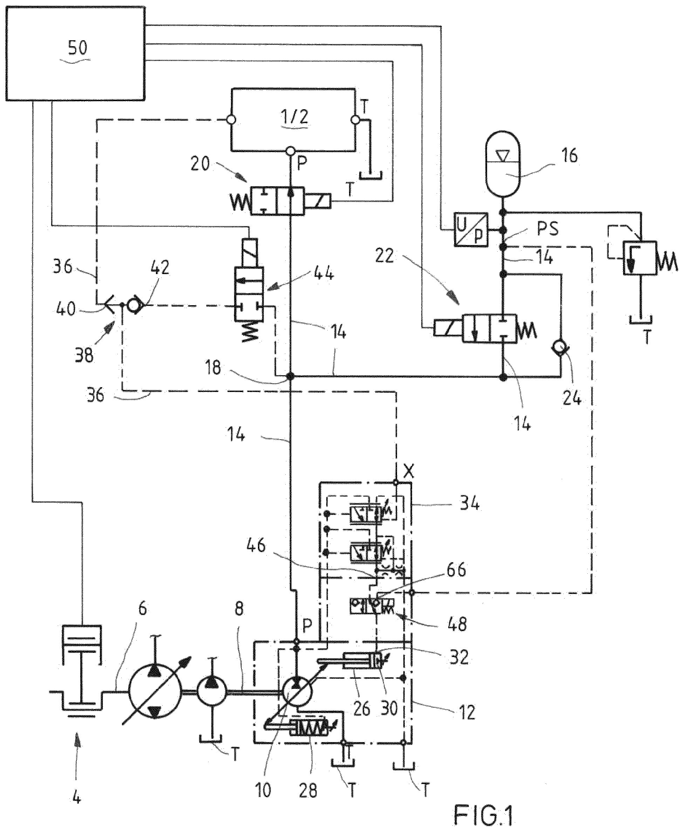

Figur 1 zeigt einen Schaltplan des ersten Ausführungsbeispiels, das außer zum Starten eines Dieselmotors auch zum Lenken und zum Betätigen einer Ausrüstung einer mobilen Arbeitsmaschine vorgesehen ist und dazu eine hydrostatische Lenkung 1 und weitere hydraulische Verbraucher 2 umfasst. Der Antrieb wird in Kombination mit einem Dieselmotor 4 verwendet, dessen Kurbelwelle 6 an eine Triebwelle 8 einer über eine Nullstellung verstellbaren Hydromaschine 10 gekoppelt werden kann, die als durchschwenkbare Axialkolbenmaschine ausgebildet ist. Deren Gehäuse 12 hat für den Haupt-Volumenstrom der Hydromaschine 10 einen Tankanschluss T und einen Pumpenanschluss P, wobei diese beiden Anschlüsse T, P dauerhaft und eindeutig Hochdruck und Tankdruck zugeordnet sind.

Der Pumpenanschluss P ist über eine verzweigte Pumpenleitung 14, die allgemeiner auch als Arbeitsleitung bezeichnet werden kann, mit der Lenkung 1 und den weiteren Verbrauchern 2 und mit einem Hochdruckspeicher 16 verbunden. Dazu hat die Pumpenleitung 14 eine Verzweigung 18. Zwischen der Verzweigung 18 einerseits und der Lenkung 1 und den weiteren Verbrauchern 2 andererseits ist ein Verbraucherabsperrventil 20 vorgesehen, das als 2/2-Wege-Schaltventil ausgebildet ist. Es trennt in einer durch eine Feder vorgespannten Sperrstellung die Lenkung 1 und die weiteren Verbraucher 2 von der Hydromaschine 10 und dem Hochdruckspeicher 16, während es in einer Schaltstellung die Pumpenleitung 14 öffnet.

Zwischen der Verzweigung 18 und dem Hochdruckspeicher 16 ist in der Pumpenleitung 14 ein Speicherabsperrventil 22 vorgesehen, das in einer durch eine Feder vorgespannten Grundstellung den Speicher 16 gegenüber der Verzweigung 18 und der Hydromaschine 10 absperrt, und das in einer Schaltstellung die Pumpenleitung 14 öffnet.

Die Hydromaschine 10 ist als durchschwenkbare Axialkolbenmaschine ausgebildet. Dazu hat sie eine Verstellvorrichtung, die im Wesentlichen einen Stellzylinder 26 aufweist, der gegen einen Gegenzylinder 28 und eine Feder wirkt, und dessen Stelldruckraum 30 über einen Stelldruckeingang 32 befüllt werden kann. Im Stillstand der Hydromaschine bauen sich die Drücke in der Verstellvorrichtung und am Hochdruckanschluss der Hydromaschine durch Leckage verhältnismäßig schnell ab, so dass die Hydromaschine durch die Feder auf maximales positives Hubvolumen gestellt wird. Bei einer Befüllung des Stelldruckraums 30 wird die Hydromaschine 10 zurückgeschwenkt, wodurch ihr Hubvolumen verringert wird. Bei einer weitergehenden Befüllung des Stelldruckraums 30 wird die Hydromaschine 10 über Null verschwenkt und bei ihrer Ausgestaltung als Axialkolbenmaschine durchgeschwenkt. Danach wird das Schluckvolumen der nun als Startermotor für den Dieselmotor 4 betreibbaren Hydromaschine 10 erhöht.

Die Befüllung des Stelldruckraums 30 kann - in der prinzipiell aus dem Stand der Technik bekannten Weise - über einen Druck-Förderstromregler 34, der ein Load-Sensing Regelventil aufweist, das im Sinne einer Druckmittelzuflusses zum Stelldruckraum 30 der Verstellvorrichtung (26) vom Pumpendruck und im Sinne eines Druckmittelabflusses aus dem Stelldruckraum 30 von einer Feder und einem LS-Druck beaufschlagt wird, der der an den LS-Anschluss X gemeldete höchste Lastdruck der Verbraucher 1, 2 oder ein vorgegebener Steuerdruck ist. Das Druckäquivalent der Feder bestimmt die Druckdifferenz, um die der Pumpendruck über dem LS-Druck liegt. Der höchste Lastdruck der Verbraucher 1, 2 wird über eine (in Figur 1 nicht gezeigte) Wechselventilkaskade abgegriffen und über eine gemeinsame LS-Meldeleitung 36 zum LS-Anschluss X übertragen.

In der LS-Meldeleitung 36 ist ein Wechselventil 38 angeordnet, an dessen ersten Eingang 40 der höchste Lastdruck der Verbraucher 1, 2 ansteht, und mit dessen zweiten Eingang 42 die Pumpenleitung 14 über ein LS-Ventil 44 verbindbar ist. Dieses sperrt in einer durch eine Feder vorgespannten Grundstellung die Pumpenleitung 14 zur LS-Meldeleitung 36 ab. In einer Schaltstellung des LS-Ventils 44 wird der Druck der Pumpenleitung 14 an das Wechselventil 38 und, wenn dieser höher als der höchste Lastdruck der Verbraucher 1, 2 ist, an den LS-Anschluss X des Druck-Förderstromreglers 34 gemeldet. Damit kann ein hydraulischer Kurzschluss erzeugt werden und der Druck-Förderstromregler 34 entlässt Druckmittel aus dem Stelldruckraum 30, wodurch der Fördervolumenstrom der als Pumpe wirkenden Hydromaschine 10 vergrößert wird. Damit kann der Hochdruckspeicher 16 geladen werden.

Zwischen einem Stelldruckausgang 46 des Druck-Förderstromreglers 34 und dem Stelldruckeingang 32 des Stellzylinders 26 ist ein 3/2-Wege-Schaltventil 48 vorgesehen, über das der Druck-Förderstromregler 34 umgangen werden kann und statt dessen Druckmittel aus dem Hochdruckspeicher 16 dem Stelldruckeingang 32 zugeführt werden kann. Dazu hat das 3/2-Wegeventil 48 einen ersten Eingang 66, der mit einem Abschnitt der Pumpenleitung 14 verbunden ist, der das Speicherabsperrventil 22 mit dem Hochdruckspeicher 16 verbindet. Ein zweiter Eingang des 3/2-Wegeventils 48 ist mit dem Stelldruckausgang 46 des Druck-Förderstromreglers 34 verbunden. Ein Stelldruckausgang des 3/2-Wegeventils 48 ist mit dem Stelldruckeingang 32 des Stellzylinders 26 verbunden.

In einer durch eine Feder vorgespannten Grundstellung des 3/2-Wegeventils 48 wird der Druck-Förderstromregler 34 über das 3/2-Wegeventil 48 mit dem Stelldruckeingang 32 verbunden, so dass der Druck-Förderstromregler 34 - in der aus dem Stand der Technik bekannten Weise - die Regelung der Hydromaschine 10 ausführen kann. Durch ein durch einen ziehenden Elektromagneten bewirktes Umschalten des 3/2-Wegeventils 48 in seine Schaltstellung wird der Hochdruckspeicher 16 mit dem Stelldruckeingang 32 verbunden, so dass die Hydromaschine 10 schnell über die Nullstellung verstellt wird und danach als Startermotor für den Dieselmotor 4 zur Verfügung steht.

Beim ersten Ausführungsbeispiel gemäß Figur 1 ist eine elektronische Steuereinheit 50 gezeigt, die die Start-Stopp-Funktion des gezeigten Antriebs überwacht. So wird zum Beispiel bei einem Neustart des gestoppten Dieselmotors 4 über die Steuereinheit 50 zunächst das Verbraucherabsperrventil 20 geschlossen, so dass die Verbraucher 1, 2 nicht unbeabsichtigt bewegt werden. Weiterhin wird das 3/2-Wegeventil 48 geschaltet, so dass die Hydromaschine 10 aus ihrer Stellung mit maximalem positivem Hubvolumen schnell über die Nullstellung verstellt wird. Erst danach wird das Speicherabsperrventil 22 geöffnet, so dass das Druckmittel aus dem geladenen Hochdruckspeicher 16 über die Pumpenleitung 14 zum Pumpenanschluss P der Hydromaschine 10 strömen kann und diese mit Druckmittel versorgt. Über die als Startermotor wirkende Hydromaschine 10 kann der Dieselmotor 4 mit richtiger Drehrichtung angelassen werden, ohne dass an der Hydromaschine Hochanschluss und Tankanschluss vertauscht worden sind.

Beim ersten Ausführungsbeispiel gemäß Figur 1 ist eine elektronische Steuereinheit 50 gezeigt, die die Start-Stopp-Funktion des gezeigten Antriebs überwacht. So wird zum Beispiel bei einem Neustart des gestoppten Dieselmotors 4 über die Steuereinheit 50 zunächst das Verbraucherabsperrventil 20 geschlossen, so dass die Verbraucher 1, 2 nicht unbeabsichtigt bewegt werden. Weiterhin wird das erfindungsgemäße 3/2-Wegeventil 48 geschaltet, so dass die Hydromaschine 10 schnell über Null verstellt wird. Danach wird das Speicherabsperrventil 22 geöffnet, so dass das Druckmittel aus dem geladenen Hochdruckspeicher 16 über die Pumpenleitung 14 zum Pumpenanschluss P der Hydromaschine 10 strömen kann und diese mit Druckmittel versorgt. Über die als Startermotor wirkende Hydromaschine 10 kann der Dieselmotor 4 in der Richtung angelassen werden, in der er zuvor betrieben wurde.

Nachdem der Dieselmotor 4 angelassen worden ist, kann neben der Versorgung der Verbraucher 1, 2 auch der Hochdruckspeicher 16 über das Rückschlagventil 24 wieder geladen werden. Das Speicherabsperrventil 22 ist dabei geschlossen. Während der Versorgung der Verbraucher 1, 2 ist dabei ein Aufladen des Hochdruckspeichers 16 bis auf den höchsten, erreichten Lastdruck der Verbraucher möglich, wobei der maximale Wert des höchsten Lastdrucks durch ein Druckbegrenzungsventil, das den Verbrauchern 1, 2 zugeordnet ist, bestimmt sein kann. Der Hochdruckspeicher soll jedoch für einen folgenden Startvorgang höher als dieser maximale Wert des höchsten Lastdrucks aufgeladen sein. Deshalb geht einem Ausschalten der Brennkraftmaschine in jedem Fall ein aktives Aufladen des Hochdruckspeichers voraus. Dazu wird das Verbraucherabsperrventil 20 geschlossen und das LS-Ventil 44 geschaltet und damit geöffnet, so dass der an der Verzweigung 18 herrschende Pumpendruck oder Speicherdruck über das erste Wechselventil 38 an den LS-Anschluss X des Druck-Förderstromreglers 34 gemeldet wird. Die Pumpe schwenkt dann auf maximales positives Hubvolumen und lädt damit den Hochdruckspeicher auf den gewünschten Druck auf. Hat der Speicherdruck, der durch einen Drucksensor erfasst wird, den gewünschten Wert erreicht, wird das LS-Ventil 44 geschlossen.

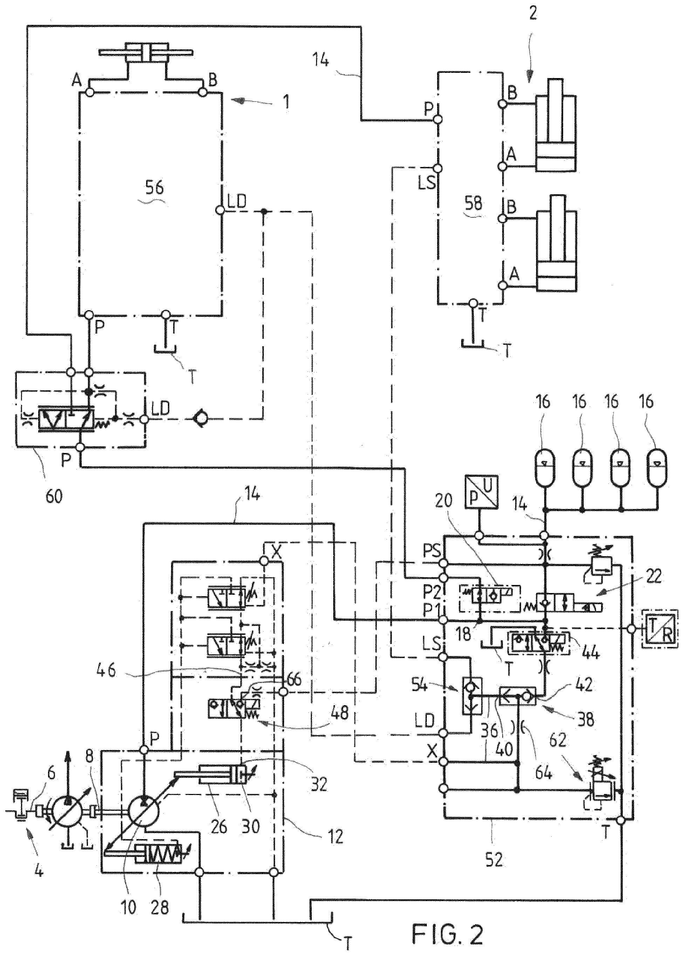

Figur 2 zeigt ein zweites Ausführungsbeispiel eines erfindungsgemäßen hydrostatischen Antriebs. Die wesentlichen Unterschiede zum ersten Ausführungsbeispiel gemäß Figur 1 sind darin zu sehen, dass ein Start-Stopp-Ventilblock 52 ausgebildet ist, in dem das Verbraucherabsperrventil 20, mit dem eine Verbindung zwischen zwei Anschlüssen P1 und P2 das Start-Stopp-Ventilblocks 52 aufgemacht und unterbrochen werden kann, das Speicherabsperrventil 22, das LS-Ventil 44 und das erste Wechselventil 38 angeordnet sind. Weiterhin ist ein zweites Wechselventil 54 im Start-Stopp-Ventilblock 52 aufgenommen, das einerseits an eine LS-Meldeleitung der Lenkung 1 und andererseits an eine LS-Meldeleitung der übrigen Verbraucher 2 angeschlossen ist. Genauer gesagt ist ein LD-Anschluss LD eines Ventilblocks 56 der Lenkung 1 und ein LS-Anschluss LS eines Ventilblocks 58 der übrigen Verbraucher 2 an das zweite Wechselventil 54 derart angeschlossen, dass der höhere Lastdruck an den ersten Eingang 40 des ersten Wechselventils 38 gemeldet wird.

Die beiden Ventilblöcke 56, 58 haben weiterhin einen Pumpenanschluss P und einen Tankanschluss T. Die Pumpenleitung 14 verzweigt über ein Prioritätsventil 60 zu den beiden Pumpenanschlüssen P der beiden Ventilblöcke 56, 58, wodurch bei einer Mangelversorgung die Lenkung 1 bevorzugt wird.

Weiterhin abweichend vom ersten Ausführungsbeispiel gemäß Figur 1 sind beim zweiten Ausführungsbeispiel gemäß Figur 2 vier zueinander parallel geschaltete Hochdruckspeicher 16 gezeigt, um so einen besonders großen Druckmittelvorrat und Energievorrat zum Anlassen des Dieselmotors 4 bereitzustellen. Zum aktiven Aufladen der Hydrospeicher 16 wird wiederum das Verbraucherabsperrventil 20 geschlossen. Es wird am LS-Anschluss X des Start-Stopp-Ventilblocks 52 ein LS-Druck erzeugt, der an den LS-Anschluss X des Druck-Förderstromreglers 34 übertragen wird. Dazu wird der am Ausgang des ersten Wechselventils 38 weitergeleitete Pumpendruck mit Hilfe einer Düse 64 und eines proportional verstellbaren Druckbegrenzungsventils 62 reduziert, bevor der Druck an die LS-Anschlüsse X des Start-Stopp-Ventilblocks 52 und des Druck-Förderstromreglers 34 übertragen wird. Die Düse 62 ist in einem Leitungsabschnitt zwischen dem Ausgang des ersten Wechselventils 38 und dem Druckbegrenzungsventil 62 angeordnet. Das Druckbegrenzungsventil 62 wird während des Ladens auf immer höhere Drücke verstellt. Der Pumpendruck ist jeweils um das Pumpen-Ap höher. Auf diese Weise können somit die Geschwindigkeit des Ladevorgangs und der maximale Speicherdruck vorgegeben werden.

Das LS-Ventil 44 des zweiten Ausführungsbeispiels gemäß Figur 2 ist als 3/2-Wegeventil ausgebildet und bietet in der gezeigten Grundstellung, die es unter der Wirkung einer Feder einnimmt, eine Entlastung des zweiten Eingangs 42 des ersten Wechselventils 38 zum Tank T. Zwischen dem zweiten Eingang des ersten Wechselventils 38 und dem LS-Ventil 44 ist eine Düse angeordnet. Diese Düse kann auch entfallen.

Durch die Integration des Verbraucherabsperrventils 20 in den Start-Stopp-Ventilblock 52 hat dieser zwei Pumpenanschlüsse P, von denen einer der Hydromaschine 10 und der andere den Verbrauchern 1, 2 zugeordnet ist. Als weitere Verbraucher 2 sind beispielhaft zwei Hubzylinder gezeigt.

Abweichend vom ersten Ausführungsbeispiel gemäß Figur 1 ist die Rückschlagfunktion, die zum Nachladen der Hochdruckspeicher 16 auch bei geschlossenem Speicherabsperrventil 22 genutzt wird, in das Speicherventil 22 integriert.

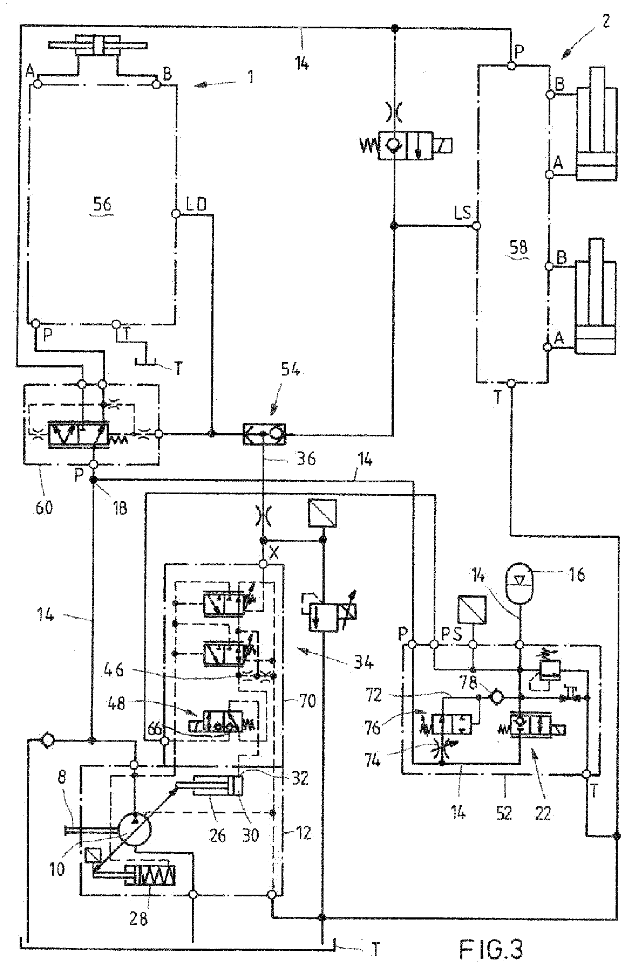

Figur 3 zeigt ein drittes Ausführungsbeispiel eines nicht zur Erfindung gehörenden hydrostatischen Antriebs, wobei der Druck-Förderstromregler 34 und das 3/2-Wegeventil 48 in einem gemeinsamen Gehäuse 70 aufgenommen sind, das an dem Gehäuse 12 der Hydromaschine 10 angesetzt ist und an der Schnittstelle die beiden Anschlüsse für den Pumpendruck und für das Stelldruckmittel bildet. Weiterhin hat das gemeinsame Gehäuse 70 des Druck-Förderstromreglers 34 und des 3/2-Wegeventils 48 den LS-Anschluss X und den beschriebenen ersten Eingang 66. Abweichend von den ersten beiden Ausführungsbeispielen gemäß den Figuren 1 und 2 ist der Aktor des 3/2-Wegeventils 48 am Ventilkörper gegenüber der Feder angeordnet, so dass er als drückender Elektromagnet ausgebildet ist.

Der Start-Stopp-Ventilblock 52 umfasst das Speicherabsperrventil 22, das als stetig verstellbares Sitzventil ausgebildet ist und in seiner Ruhestellung sperrt. In einer Parallelleitung 72 parallel zum Speicherabsperrventil 22 sind eine einstellbare Drossel 74, ein Druckreduzierventil 76 und ein vom Druckreduzierventil 76 zum Hochdruckspeicher 16 öffnendes Rückschlagventil 78 angeordnet. Über die Drossel 74, das Druckreduzierventil 76 und das Rückschlagventil 78 ist ein passives und aktives Aufladen des Hochdruckspeichers 16 bis auf einen durch die Einstellung des Druckreduzierventils 76 vorgegebenen Höchstwert möglich.

Die stetige Verstellbarkeit des Speicherabsperrventils 22 bringt den Vorteil mit sich, dass der aus dem Hochdruckspeicher 16 der Hydromaschine 10 zufließende Volumenstrom ausgehend vom geschlossenen Ventil rampenartig erhöht werden. Dadurch kann erreicht werden, dass der Druckanstieg in der Pumpenleitung 14 und an der Hydromaschine 10 nicht zu steil wird und die Ventile nicht durch einen anfänglich zu hohen Volumenstrom überlastet werden.

Offenbart ist ein hydrostatischer Antrieb, der zum Starten einer Brennkraftmaschine vorgesehen ist, und der einen mittels einer hydraulischen Verstellvorrichtung in ihrem Hubvolumen verstellbaren Hydromaschine, die als Pumpe und als Motor betreibbar ist und in einem Betrieb als Motor zum Antreiben der Brennkraftmaschine vorgesehen ist, zumindest einen Hochdruckspeicher, aus dem die Hydromaschine für den Betrieb als Motor über eine Pumpenleitung, die zwischen einem Arbeitsanschluss der Hydromaschine und dem Hochdruckspeicher verläuft, mit Druckmittel versorgbar ist, und ein Speicherabsperrventil mit einer ersten Stellung und einer zweiten Stellung, das in der Pumpenleitung angeordnet ist und durch das eine fluidische Verbindung vom Hochdruckspeicher zur Hydromaschine in der ersten Stellung offen und in der zweiten Stellung abgesperrt ist. um ohne viel Aufwand ein schnelles und sicheres Starten der Brennkraftmaschine zu gewährleisten, ist die Hydromaschine durch die Verstellvorrichtung von einem positiven Hubvolumen und Pumpenbetrieb über eine Nullstellung, in der das Hubvolumen null ist, zu negativem Hubvolumen und Motorbetrieb verstellbar. Für eine Verstellung zu negativem Hubvolumen ist die Verstellvorrichtung über ein Steuerventil unabhängig vom Arbeitsanschluss der Hydromaschine aus einer Druckmittelquelle mit Druckmittel versorgbar.

### Bezugszeichenliste

- 1: Lenkhydraulik
- 2: weitere Verbraucher
- 4: Dieselmotor
- 6: Kurbelwelle
- 8: Triebwelle
- 10: Hydromaschine
- 12: Gehäuse
- 14: Pumpenleitung
- 16: Hochdruckspeicher
- 18: Verzweigung
- 20: Verbraucherabsperrventil
- 22: Speicherabsperrventil
- 24: Rückschlagventil
- 26: Stellzylinder
- 28: Gegenzylinder
- 30: Stelldruckraum
- 32: Stelldruckeingang
- 34: Druck-Förderstromregler
- 36: LS-Meldeleitung
- 38: erstes Wechselventil
- 40: erster Eingang
- 42: zweiter Eingang
- 44: LS-Ventil
- 46: Stelldruckausgang
- 48: 3/2-Wegeventil
- 50: elektronische Steuereinheit
- 52: Start-Stopp-Ventilblock
- 54: zweites Wechselventil
- 56, 58: Ventilblock
- 60: Prioritätsventil
- 62: einstellbares Druckbegrenzungsventil
- 64: Düse
- 66: Eingang von 48
- 70: Gehäuse
- 72: Parallelleitung
- 74: einstellbare Drossel
- 76: Druckreduzierventil
- 78: Rückschlagventil

- A, B: Arbeitsanschluss
- LD: LD-Anschluss
- LS: LS-Anschluss
- T: Tank, Tankanschluss
- P: Pumpenanschluss
- PS: Steuerdruckausgang
- X: LS-Anschluss

## Patentansprüche

1. Anordnung mit einer Brennkraftmaschine (4), zumindest einem Verbraucher (1,2) und einem hydrostatischen Antrieb zum Starten der Brennkraftmaschine (4) mit einer mittels einer hydraulischen Verstellvorrichtung (26) in ihrem Hubvolumen verstellbaren Hydromaschine (10), die als Pumpe und als Motor betreibbar ist und in einem Betrieb als Motor zum Antreiben der Brennkraftmaschine (4) vorgesehen ist, mit zumindest einem Hochdruckspeicher (16), aus dem die Hydromaschine (10) für den Betrieb als Motor über eine Pumpenleitung (14), die zwischen einem Arbeitsanschluss der Hydromaschine (10) und dem Hochdruckspeicher (16) verläuft, mit Druckmittel versorgbar ist, und mit einem Speicherabsperrventil (22) mit einer ersten Stellung und einer zweiten Stellung, das in der Pumpenleitung (14) angeordnet ist und durch das eine fluidische Verbindung vom Hochdruckspeicher (16) zur Hydromaschine (10) in der ersten Stellung offen und in der zweiten Stellung abgesperrt ist, wobei die Hydromaschine (10) durch die Verstellvorrichtung (26) von einem positiven Hubvolumen und Pumpenbetrieb über eine Nullstellung, in der das Hubvolumen null ist, zu negativem Hubvolumen und Motorbetrieb verstellbar ist, und wobei für eine Verstellung zu negativem Hubvolumen die Verstellvorrichtung (26) über ein Steuerventil (48) unabhängig vom Arbeitsanschluss der Hydromaschine (10) aus einer Druckmittelquelle (16) mit Druckmittel versorgbar ist, **dadurch gekennzeichnet, dass** in der Pumpenleitung (14) ein Verbraucherabsperrventil (20) vorgesehen ist, mit dem zumindest der eine Verbraucher (1, 2) absperrbar und von der Hydromaschine (10) trennbar ist, wenn die Brennkraftmaschine (4) gestartet wird.

2. Anordnung nach Patentanspruch 1, wobei für die Verstellung zu negativem Hubvolumen die Verstellvorrichtung (26) über das Steuerventil (48) aus dem Hochdruckspeicher (16) mit Druckmittel versorgbar ist.

3. Anordnung nach Patentanspruch 1, wobei für die Verstellung zu negativem Hubvolumen die Verstellvorrichtung (26) über das Steuerventil (48) aus einem Hilfs-Hydrospeicher mit Druckmittel versorgbar ist.

4. Anordnung nach einem vorhergehenden Patentanspruch, wobei bei der Verstellung zu negativem Hubvolumen zuerst die Verstellvorrichtung (26) über das Steuerventil (48) mit Stelldruck beaufschlagt und der Arbeitsanschluss der Hydromaschine (10) erst dann mit Druckmittel aus dem Hochdruckspeicher (16) versorgt wird, wenn die Hydromaschine (10) auf ein negatives Hubvolumen verstellt ist.

5. Anordnung nach Patentanspruch 4, wobei bei der Verstellung zu negativem Hubvolumen zuerst über das Steuerventil (48) die Verstellvorrichtung (26) mit Stelldruck beaufschlagt und mit einer zeitlichen Verzögerung das Speicherabsperrventil (22) in seine erste Stellung gebracht wird.

6. Anordnung nach einem vorhergehenden Patentanspruch, wobei das Steuerventil (48) ein Sitzventil ist mit einem Eingang (66), der mit der Druckmittelquelle (16) fluidisch verbunden ist, und mit einem Stelldruckausgang, der mit einem Stelldruckeingang (32) der Verstellvorrichtung (26) verbunden ist, und wobei das Steuerventil (48) eine erste Stellung, in der der Eingang (66) wenigstens annähernd leckagefrei abgesperrt ist, und eine zweite Stellung aufweist, in der der Eingang (66) mit dem Stelldruckausgang fluidisch verbunden ist.

7. Anordnung nach einem vorhergehenden Patentanspruch, wobei der Hochdruckspeicher (16) von der Hydromaschine (10) im Betrieb als Pumpe aufladbar ist.

8. Anordnung nach einem vorhergehenden Patentanspruch, wobei der Hydromaschine (10) für den Betrieb als Pumpe ein hydraulisches Regelgerät (34) mit einem Stelldruckausgang zugeordnet ist, wobei das Steuerventil (48) ein 3/2-Wegeventil mit einem ersten Eingang, der mit dem Stelldruckausgang des hydraulischen Regelgeräts (34) fluidisch verbunden ist, mit einem zweiten Eingang (66), der mit der Druckmittelquelle (16) fluidisch verbunden ist, und mit einem Ausgang ist, der mit einem Stelldruckeingang (32) der Verstellvorrichtung (26) verbunden ist, und wobei das Steuerventil (48) eine erste Stellung, in der der Ausgang mit dem der erste Eingang fluidisch verbunden und der zweite Eingang (66) abgesperrt ist, und eine zweite Stellung aufweist, in der der Ausgang mit dem zweiten Eingang (66) verbunden und der erster Eingang abgesperrt ist.

9. Anordnung nach Patentanspruch 8, wobei das hydraulische Regelgerät (34) ein Load-Sensing (LS-) Regelventil ist, das im Sinne eines Druckmittelzuflusses zum Stelldruckraum (30) der Verstellvorrichtung (26) vom Pumpendruck und im Sinne eines Druckmittelabflusses aus dem Stelldruckraum (30) von einer Feder und einem LS-Druck, der an einem LS-Anschluss (X) ansteht, beaufschlagt wird.

10. Anordnung nach Patentanspruch 9, wobei an den LS-Anschluss (X) zwischen diesem und einer Düse (64) ein verstellbares Druckbegrenzungsventil (62) angeschlossen ist.

11. Anordnung nach Patentanspruch 9 oder 10, wobei von der Hydromaschine (10) im Betrieb als Pumpe außer dem Hochdruckspeicher (16) der wenigstens eine hydraulische Verbraucher (1, 2) mit Druckmittel versorgbar ist, wobei die als Pumpe betriebene Hydromaschine (10) in Abhängigkeit eines in einer gemeinsamen LS-Meldeleitung (36) anstehenden höchsten Lastdrucks des zumindest einen Verbrauchers (1, 2) regelbar ist, wozu die LS-Meldeleitung (36) mit einem LS-Anschluss (X) des LS-Regelgeräts (34) verbunden ist, wobei über ein LS-Ventil (44) auch die Pumpenleitung (14) mit der LS-Meldeleitung (36) oder direkt mit dem LS-Anschluss (X) verbindbar ist.

12. Anordnung nach Patentanspruch 11, wobei das LS-Ventil (44) ein Schaltventil ist, das in einer durch eine Feder vorgespannten Grundstellung die Pumpenleitung (14) zur LS-Meldeleitung (36) oder zum LS-Anschluss (X) absperrt, und das in einer Schaltstellung die Pumpenleitung (14) mit der LS-Meldeleitung (36) oder mit dem LS-Anschluss (X) verbindet.

13. Anordnung nach Patentanspruch 11 oder 12, wobei in der LS-Meldeleitung (36) ein erstes Wechselventil (38) angeordnet ist, an dessen ersten Eingang (40) der höchste Lastdruck des zumindest einen Verbrauchers (1, 2) ansteht, und an dessen zweiten Eingang (42) das LS-Ventil (44) angeschlossen ist.

## Claims

1. Arrangement having an internal combustion engine (4), at least one consumer (1, 2) and a hydrostatic drive for starting the internal combustion engine (4), with a hydraulic machine (10) which is adjustable in a its swept volume by means of a hydraulic adjustment device (26), is operable as a pump and as a motor, and in a mode as a motor, is provided for driving the internal combustion engine (4), with at least one high pressure accumulator (16) from which the hydraulic machine (10) is suppliable with pressure medium via a pump line (14), which runs between a working connection of the hydraulic machine (10) and the high pressure accumulator (16) for the mode as a motor, and with an accumulator shut off valve (22) having a first position and a second position, which is arranged in the pump line (14) and by means of which a fluidic connection from the high pressure accumulator (16) to the hydraulic machine (10) is open in the first position and is shut off in the second position, wherein the hydraulic machine (10) is adjustable by the adjustment device (26) from a positive swept volume and pump mode via a zero position, in which the swept volume is zero, to a negative swept volume and motor mode, and wherein, for an adjustment to a negative swept volume, the adjustment device (26) is suppliable with pressure medium from a pressure medium source (16) via a control valve (48) independently of the working connection of the hydraulic machine (10), **characterized in that** a consumer shut off valve (20) is provided in the pump line (14), by means of which consumer shut off valve at least the one consumer (1, 2) can be shut off and can be separated from the hydraulic machine (10) when the internal combustion engine (4) is started.

2. Arrangement according to Patent Claim 1, wherein, for the adjustment to a negative swept volume, the adjustment device (26) is suppliable with pressure medium from the high pressure accumulator (16) via the control valve (48).

3. Arrangement according to Patent Claim 1, wherein, for the adjustment to a negative swept volume, the adjustment device (26) is suppliable with pressure medium from an auxiliary hydraulic accumulator via the control valve (48).

4. Arrangement according to a preceding patent claim, wherein, during the adjustment to a negative swept volume, first of all the adjustment device (26) is acted upon with actuating pressure via the control valve (48), and the working connection of the hydraulic machine (10) is then only supplied with pressure medium from the high pressure accumulator (16) when the hydraulic machine (10) is adjusted to a negative swept volume.

5. Arrangement according to Patent Claim 4, wherein, during the adjustment to a negative swept volume, first of all the adjustment device (26) is acted upon with actuating pressure via the control valve (48) and the accumulator shut off valve (22) is brought into its first position with a time delay.

6. Arrangement according to a preceding patent claim, wherein the control valve (48) is a seat valve with an inlet (66) which is fluidically connected to the pressure medium source (16), and with an actuating pressure outlet which is connected to an actuating pressure inlet (32) of the adjustment device (26), and wherein the control valve (48) has a first position in which the inlet (66) is shut off in an at least approximately leakage-free manner, and a second position in which the inlet (66) is fluidically connected to the actuating pressure outlet.

7. Arrangement according to a preceding patent claim, wherein the high pressure accumulator (16) is superchargeable by the hydraulic machine (10) in the mode as a pump.

8. Arrangement according to a preceding patent claim, wherein, for the mode as a pump, the hydraulic machine (10) is assigned a hydraulic regulating device (34) with an actuating pressure outlet, wherein the control valve (48) is a 3/2-way valve with a first inlet which is fluidically connected to the actuating pressure outlet of the hydraulic regulating device (34), with a second inlet (66) which is fluidically connected to the pressure medium source (16), and with an outlet which is connected to an actuating pressure inlet (32) of the adjustment device (26), and wherein the control valve (48) has a first position, in which the outlet is fluidically connected to the first inlet and the second inlet (66) is shut off, and a second position in which the outlet is connected to the second inlet (66) and the first inlet is shut off.

9. Arrangement according to Patent Claim 8, wherein the hydraulic regulating device (34) is a load-sensing (LS) regulating valve which is acted upon by the pump pressure, with the effect of a pressure medium inflow to the actuating pressure chamber (30) of the adjustment device (26), and is acted upon by a spring and an LS pressure, which is present at an LS connection (X), with the effect of a pressure medium outflow from the actuating pressure chamber (30).

10. Arrangement according to Patent Claim 9, wherein an adjustable pressure limiting valve (62) is connected to the LS connection (X) between the latter and a nozzle (64).

11. Arrangement according to Patent Claim 9 or 10, wherein, in the mode as a pump, apart from the high pressure accumulator (16) the at least one hydraulic consumer (1, 2) is suppliable with pressure medium by the hydraulic machine (10), wherein the hydraulic machine (10) operated as a pump is regulable depending on a highest load pressure of the at least one consumer (1, 2), said load pressure being present in a common LS indicator line (36), for which purpose the LS indicator line (36) is connected to an LS connection (X) of the LS regulating device (34), wherein the pump line (14) is also connectable to the LS indicator line (36) or directly to the LS connection (X) via an LS valve (44).

12. Arrangement according to Patent Claim 11, wherein the LS valve (44) is a switching valve which, in a basic position pretensioned by a spring, shuts off the pump line (14) to the LS indicator line (36) or to the LS connection (X), and which, in a switching position, connects the pump line (14) to the LS indicator line (36) or to the LS connection (X) .

13. Arrangement according to Patent Claim 11 or 12, wherein a first shuttle valve (38) is arranged in the LS indicator line (36), at the first inlet (40) of which shuttle valve the highest load pressure of the at least one consumer (1, 2) is present, and to the second inlet (42) of which shuttle valve the LS valve (44) is connected.

## Revendications

1. Arrangement avec un moteur à combustion interne (4), au moins un consommateur (1, 2) et un entraînement hydrostatique pour le démarrage du moteur à combustion interne (4) avec une machine hydraulique (10) à cylindrée variable au moyen d'un dispositif de réglage hydraulique (26), qui peut fonctionner en pompe et en moteur et qui est prévue dans un fonctionnement en moteur pour l'entraînement du moteur à combustion interne (4), avec au moins un réservoir haute pression (16) à partir duquel la machine hydraulique (10) peut être alimentée en fluide sous pression pour le fonctionnement en moteur par une conduite de pompe (14), qui s'étend entre un raccord de travail de la machine hydraulique (10) et le réservoir haute pression (16), et avec une vanne de fermeture du réservoir (22) avec une première position et une seconde position, qui est disposée dans la conduite de pompe (14) et par laquelle une liaison fluidique du réservoir haute pression (16) à la machine hydraulique (10) est ouverte dans la première position et est fermée dans la seconde position, dans lequel la machine hydraulique (10) peut être réglée par le dispositif de réglage (26) d'une cylindrée positive et un fonctionnement en pompe via une position zéro, dans laquelle la cylindrée est nulle, à une cylindrée négative et un fonctionnement en moteur, et dans lequel pour un réglage à une cylindrée négative le dispositif de réglage (26) peut être alimenté en fluide sous pression à partir d'une source de fluide sous pression (16) par une vanne de commande (48) indépendamment du raccord de travail de la machine hydraulique (10), **caractérisé en ce qu'**il est prévu dans la conduite de pompe (14) une vanne de fermeture de consommateur (20), avec laquelle au moins un des consommateurs (1, 2) peut être fermé et peut être séparé de la machine hydraulique (10), lorsque l'on fait démarrer le moteur à combustion interne (4).

2. Arrangement selon la revendication 1, dans lequel pour le réglage à une cylindrée négative le dispositif de réglage (26) peut être alimenté en fluide sous pression à partir du réservoir haute pression (16) via la vanne de commande (48).

3. Arrangement selon la revendication 1, dans lequel pour le réglage à une cylindrée négative le dispositif de réglage (26) peut être alimenté en fluide sous pression à partir d'un réservoir hydraulique auxiliaire via la vanne de commande (48).

4. Arrangement selon l'une quelconque des revendications précédentes, dans lequel lors du réglage à une cylindrée négative le dispositif de réglage (26) est d'abord soumis à une pression de réglage via la vanne de commande (48) et le raccord de travail de la machine hydraulique (10) n'est alimenté en fluide sous pression à partir du réservoir haute pression (16) que lorsque la machine hydraulique (10) est réglée à une cylindrée négative.

5. Arrangement selon la revendication 4, dans lequel lors du réglage à une cylindrée négative le dispositif de réglage (26) est d'abord soumis à une pression de réglage via la vanne de commande (48) et la vanne de fermeture du réservoir (22) est amenée dans sa première position avec un retard temporel.

6. Arrangement selon l'une quelconque des revendications précédentes, dans lequel la vanne de commande (48) est une soupape à siège avec une entrée (66), qui est en liaison fluidique avec la source de fluide sous pression (16), et avec une sortie de pression de réglage, qui est reliée à une entrée de pression de réglage (32) du dispositif de réglage (26), et dans lequel la vanne de commande (48) présente une première position, dans laquelle l'entrée (66) est fermée au moins approximativement sans fuite, et une seconde position, dans laquelle l'entrée (66) est en liaison fluidique avec la sortie de pression de réglage.

7. Arrangement selon l'une quelconque des revendications précédentes, dans lequel le réservoir haute pression (16) peut être chargé par la machine hydraulique (10) fonctionnant en pompe.

8. Arrangement selon l'une quelconque des revendications précédentes, dans lequel un appareil de régulation hydraulique (34) avec une sortie de pression de réglage est associé à la machine hydraulique (10) pour le fonctionnement en pompe, dans lequel la vanne de commande (48) est une vanne à 3/2 voies avec une première entrée, qui est en liaison fluidique avec la sortie de pression de réglage de l'appareil de régulation hydraulique (34), avec une deuxième entrée (66), qui est en liaison fluidique avec la source de fluide sous pression (16), et avec une sortie, qui est reliée à une entrée de pression de réglage (32) du dispositif de réglage (26), et dans lequel la vanne de commande (48) présente une première position, dans laquelle la sortie est en liaison fluidique avec la première entrée et la deuxième entrée (66) est fermée, et une deuxième position, dans laquelle la sortie est reliée à la deuxième entrée (66) et la première entrée est fermée.

9. Arrangement selon la revendication 8, dans lequel l'appareil de régulation hydraulique (34) est une vanne de régulation Load Sensing (LS), qui est soumise dans le sens d'une arrivée de fluide sous pression à la chambre de pression de réglage (30) du dispositif de réglage (26) à la pression de la pompe et dans le sens d'un départ de fluide sous pression hors de la chambre de pression de réglage (30) à un ressort et à une pression LS, qui est présente à un raccord LS (X).

10. Arrangement selon la revendication 9, dans lequel une soupape de limitation de pression réglable (62) est raccordée au raccord LS (X) entre celui-ci et une buse (64) .

11. Arrangement selon une revendication 9 ou 10, dans lequel ledit au moins un consommateur hydraulique (1, 2) peut être alimenté en fluide sous pression par la machine hydraulique (10) fonctionnant en pompe en plus du réservoir haute pression (16), dans lequel la machine hydraulique (10) fonctionnant en pompe peut être régulée en fonction d'une pression de charge la plus élevée dudit au moins un consommateur (1, 2) présente dans une conduite de signalisation LS commune (36), la conduite de signalisation LS (36) étant à cet effet raccordée à un raccord LS (X) de l'appareil de régulation LS (34), dans lequel la conduite de pompe (14) peut aussi être reliée à la conduite de signalisation LS (36) via une vanne LS (44) ou directement au raccord LS (X).

12. Arrangement selon la revendication 11, dans lequel la vanne LS (44) est une soupape de commande, qui dans une position de base précontrainte par un ressort ferme la conduite de pompe (14) vers la conduite de signalisation LS (36) ou vers le raccord LS (X) et qui dans une position commutée relie la conduite de pompe (14) à la conduite de signalisation LS (36) ou au raccord LS (X).

13. Arrangement selon une revendication 11 ou 12, dans lequel une première vanne d'inversion (38) est disposée dans la conduite de signalisation LS (36), dont la première entrée (40) présente la pression de charge la plus élevée dudit au moins un consommateur (1, 2) et dont la deuxième entrée (42) est raccordée à la vanne LS (44).
